# EUROPEAN PATENT APPLICATION

(11) **EP 4 711 390 A1**
(43) Date of publication of application: **18.03.2026**
(21) Application number: 24807339.7
(22) Date of filing: 25.03.2024
(51) Int. Cl.: C08F 110/02, C08F 4/654, C08F 4/649, C08F 4/642, C08F 4/646

(54) **ZIEGLER-NATTA CATALYST FOR ETHYLENE POLYMERIZATION AND METHOD FOR PREPARING SAME**

(30) Priority: 12.05.2023 KR 20230062022
(71) Applicant: Hanwha Solutions Corporation, Seoul 04541 (KR)
(72) Inventor: WOO, Hyun Je, Seoul 04541 (KR); JOUNG, Ui Gab, Seoul 04541 (KR); KU, Il Hwae, Seoul 04541 (KR); KWON, Yea Rang, Seoul 04541 (KR)
(74) Representative: Berggren Oy
(86) International application number: PCT/KR2024/003685
(87) International publication number: WO 2024/237458

(57) **Abstract**

A Ziegler-Natta catalyst for ethylene polymerization includes not only a Ziegler-Natta pro-catalyst for ethylene polymerization containing an internal electron donor satisfying a specific formula, but also at least one external electron donor satisfying a specific formula to increase the number of active sites of a titanium compound, whereby polyethylene prepared using the Ziegler-Natta catalyst for ethylene polymerization has a high MFR ratio and thus good processability, thereby securing improvement in productivity of a polyethylene resin.

## Description

### [Technical Field]

The present invention relates to a Ziegler-Natta pro-catalyst for ethylene polymerization, a Ziegler-Natta catalyst for ethylene polymerization comprising the same, a method for preparing the same, and polyethylene with good processability prepared using the Ziegler-Natta catalyst for ethylene polymerization.

### [Background Art]

Polyolefins are a class of polymer derived from simple olefins. A polyolefin preparation method known in the art is carried out using a Ziegler-Natta catalyst for polymerization. The catalyst provides a polymer with a highly isotactic stereochemical arrangement through polymerization of a vinyl monomer using a transition metal halide.

In particular, as polyethylene, a kind of polyolefin, has been used for various applications in recent years, there is a need for a catalyst and method for preparing a polyethylene resin with good processability to improve productivity of the polyethylene resin.
(Patent Reference 1) KR 10-2423660 B

### [Disclosure]

### [Technical Problem]

The present invention is aimed at providing a Ziegler-Natta pro-catalyst for ethylene polymerization including an internal electron donor satisfying a specific formula; a Ziegler-Natta catalyst for ethylene polymerization including at least one external electron donor satisfying a specific formula in a specific ratio to the Ziegler-Natta pro-catalyst for ethylene polymerization; and polyethylene with good processability prepared using the Ziegler-Natta catalyst for ethylene polymerization.

### [Technical Solution]

In accordance with one aspect of the present invention, a Ziegler-Natta pro-catalyst for ethylene polymerization includes: a titanium compound represented by Formula 1; a magnesium compound represented by Formula 2; and an internal electron donor represented by Formula 3.

[Formula 1] TiXₙ(OR¹)₄₋ₙ

(In Formula 1,
R¹ is a substituted or unsubstituted C₁ to C₂₀ alkyl group;
a substituent in "substituted or unsubstituted" is independently at least one selected from the group consisting of a halogen group, a cyano group, a nitro group, and a C₁ to C₈ alkyl group;
X is a halogen atom; and
n is an integer of 0 to 4.)

[Formula 2] MgX₂

(In Formula 2,
X is a halogen atom.)

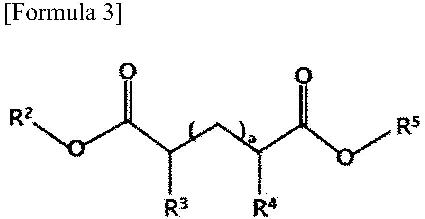

(In Formula 3,
R² and R⁵ are independently a substituted or unsubstituted C₁ to C₂₀ alkyl group;
R³ and R⁴ are independently a substituted or unsubstituted C₁ to C₂₀ alkyl group, or are linked together to form a substituted or unsubstituted alicyclic ring;
a substituent in "substituted or unsubstituted" is independently at least one selected from the group consisting of a halogen group, a cyano group, a nitro group, and a C₁ to C₈ alkyl group; and
a is an integer of 0 to 5.)

The internal electron donor may include a compound represented by Formula 3-1.

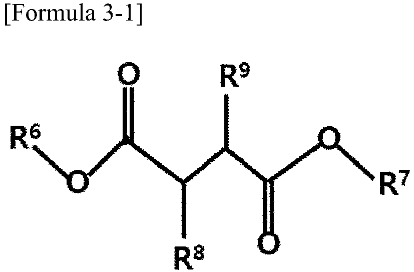

(In Formula 3-1,
R⁶ and R⁷ are independently a substituted or unsubstituted C₁ to C₁₀ alkyl group;
R⁸ and R⁹ are independently a hydrogen atom or a substituted or unsubstituted C₁ to C₁₀ alkyl group, or are linked together to form a substituted or unsubstituted C₅ to C₁₂ alicyclic ring; and
a substituent in "substituted or unsubstituted" is independently at least one selected from the group consisting of a halogen group, a cyano group, a nitro group, and a C₁ to C₈ alkyl group.)

The internal electron donor may include at least one selected from the group consisting of diethyl-2,2-diisopropyl succinate, diethyl cyclohexane-1,2-dicarboxylate, and diisopropyl succinate.

In accordance with another aspect of the present invention, a Ziegler-Natta catalyst for ethylene polymerization includes: a Ziegler-Natta pro-catalyst for ethylene polymerization including an internal electron donor represented by Formula 3; an organoaluminum compound represented by Formula 4; and an external electron donor represented by Formula 5.

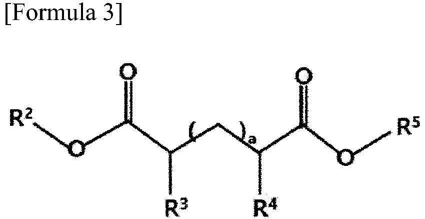

(In Formula 3,
R² and R⁵ are independently a substituted or unsubstituted C₁ to C₂₀ alkyl group;
R³ and R⁴ are independently a substituted or unsubstituted C₁ to C₂₀ alkyl group, or are linked together to form a substituted or unsubstituted alicyclic ring;
a substituent in "substituted or unsubstituted" is independently at least one selected from the group consisting of a halogen group, a cyano group, a nitro group, and a C₁ to C₈ alkyl group; and
a is an integer of 0 to 5.)

[Formula 4] AlR¹⁰ₙX₃₋ₙ

(In Formula 4,
R¹⁰ is a substituted or unsubstituted C₁ to C₂₀ alkyl group;
a substituent in "substituted or unsubstituted" is independently at least one selected from the group consisting of a halogen group, a cyano group, a nitro group, and a C₁ to C₈ alkyl group;
X is a halogen atom; and
n is an integer of 0 to 3.)

[Formula 5] R¹¹ₘSi(OR¹²)₄₋ₘ

(In Formula 5,
R¹¹ and R¹² are independently a substituted or unsubstituted C₁ to C₂₀ alkyl group, a substituted or unsubstituted C₅ to C₂₀ cycloalkyl group, or a substituted or unsubstituted amine group;
a substituent in "substituted or unsubstituted" is independently at least one selected from the group consisting of a halogen group, a cyano group, a nitro group, and a C₁ to C₈ alkyl group; and
m is an integer of 0 to 4.)

The internal electron donor may be a compound represented by Formula 3-1.

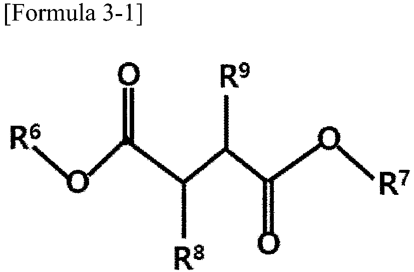

(In Formula 3-1,
R⁶ and R⁷ are independently a substituted or unsubstituted C₁ to C₁₀ alkyl group;
R⁸ and R⁹ are independently a hydrogen atom or a substituted or unsubstituted C₁ to C₁₀ alkyl group, or are linked together to form a substituted or unsubstituted C₅ to C₁₂ alicyclic ring; and
a substituent in "substituted or unsubstituted" is independently at least one selected from the group consisting of a halogen group, a cyano group, a nitro group, and a C₁ to C₈ alkyl group.)

The internal electron donor may include at least one selected from the group consisting of diethyl-2,2-diisopropyl succinate, diethyl cyclohexane-1,2-dicarboxylate, and diisopropyl succinate.

The external electron donor may include at least one of compounds represented by Formula 5-1 and Formula 5-2.

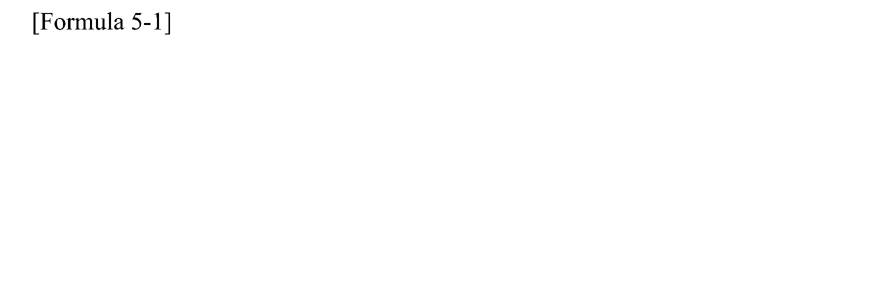

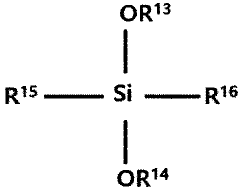

(In Formula 5-1,
R¹³ to R¹⁶ are independently a substituted or unsubstituted C₁ to C₂₀ alkyl group, or a substituted or unsubstituted C₅ to C₂₀ cycloalkyl group; and
a substituent in "substituted or unsubstituted" is independently at least one selected from the group consisting of a halogen group, a cyano group, a nitro group, and a C₁ to C₈ alkyl group.)

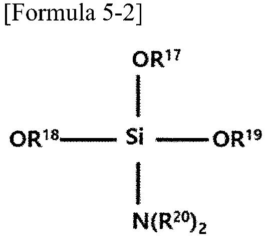

(In Formula 5-2,
R¹⁷ to R²⁰ are independently a substituted or unsubstituted C₁ to C₂₀ alkyl group, or a substituted or unsubstituted C₅ to C₂₀ cycloalkyl group; and
a substituent in "substituted or unsubstituted" is independently at least one selected from the group consisting of a halogen group, a cyano group, a nitro group, and a C₁ to C₈ alkyl group.)

The external electron donor may include at least one of compounds represented by Formula 5-1a to Formula 5-1d and Formula 5-2a.

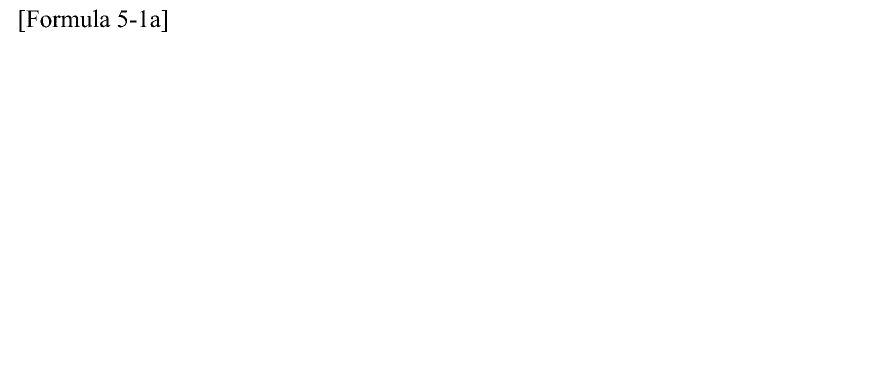

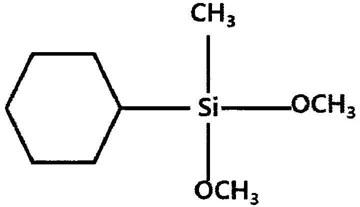

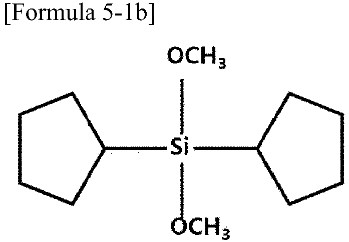

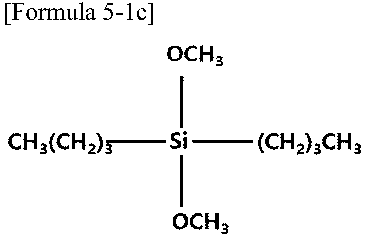

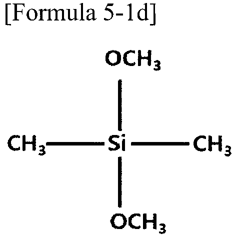

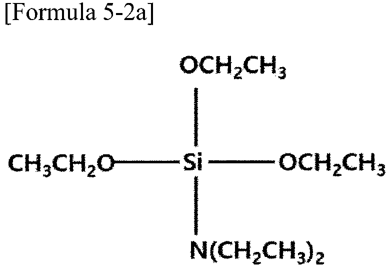

In one embodiment, the external electron donor may include two compounds selected from the compounds represented by Formula 5-1a to Formula 5-1d and Formula 5-2a. In some embodiments, the external electron donor may include a first compound selected from among the compounds represented by Formula 5-1a, Formula 5-1d, and Formula 5-2a, and a second compound selected from among the compounds represented by Formula 5-1a, Formula 5-1d, and Formula 5-2a, wherein the first compound and the second compound are not identical, and a mole ratio of the first compound to the second compound may be about 1:0.5 to 1.5. In some embodiments, the mole ratio of the first compound to the second compound may be about 1:0.6 to about 1.4, for example, about 1:0.8, about 1:1, or about 1:1.2.

A mole ratio of the titanium compound to the external electron donor in the Ziegler-Natta pro-catalyst for ethylene polymerization may be about 1:3 to 7. In some embodiments, the mole ratio of the titanium compound to the external electron donor in the Ziegler-Natta pro-catalyst for ethylene polymerization may be about 1:3.1 to 6.8, for example, about 1:3.5, about 1:4.0, about 1:4.5, about 1:5.0, about 1:5.5, about 1:6.0, or about 1:6.5.

In accordance with a further aspect of the present invention, a method for preparing polyolefin includes: polymerizing an olefin represented by Formula 6 in the presence of the Ziegler-Natta catalyst for ethylene polymerization.

[Formula 6] CH₂=CHR²¹

In Formula 6, R²¹ is a hydrogen atom or a C₁ to C₆ alkyl or aryl group.

The polymerization may be carried out under conditions of a pressure of about 6 bar to 8 bar and a temperature of about 80°C to 90°C in a hydrogen gas atmosphere.

In accordance with yet another aspect, a polyethylene resin is prepared by the polyolefin preparation method and has an MFR ratio (MFR_{21.6}/MFR_{2.16}) of about 30 to about 40. In some embodiments, the polyethylene may have an MFR ratio (MFR_{21.6}/MFR_{2.16}) of about 30.2 to about 39.8, for example, 30.6, 31.1, 31.2, 31.7, 32.4, 32.8, 36.4, 37.6, 36.7, or 39.8.

### [Advantageous Effects]

The Ziegler-Natta pro-catalyst for ethylene polymerization includes an internal electron donor satisfying a specific formula to increase the number of active sites of a titanium compound, and the Ziegler-Natta catalyst for ethylene polymerization further includes at least one external electron donor satisfying a specific formula in a certain ratio to increase the number of active sites of the titanium compound, thereby providing polyethylene with good processability.

### [Best Mode]

These and other objects, features, and advantages will become apparent from the following embodiments described with reference to the accompanying drawings. However, the present invention is not limited to the embodiments described herein and may be embodied in other forms. Rather, the following embodiments are given by way of illustration to provide a thorough and complete understanding of the present invention such that technical ideas can be fully conveyed to those skilled in the art.

As used herein, it should be understood that the terms "comprise", "include", "have", and the like are intended to specify the presence of stated features, numbers, steps, operations, components, parts, or combinations thereof, and are not intended to preclude the presence or addition of one or more other features, numbers, steps, operations, components, parts, or combinations thereof.

Herein, unless stated otherwise, all numbers, values and/or expressions used herein to express amounts of components, reaction conditions, polymer compositions and formulations should be understood to be qualified in all cases by the term "about", since such numbers are inherently approximate values reflecting, among other things, various uncertainties in measurement encountered in obtaining such values. Further, when a numerical range is disclosed herein, such a range is continuous and includes all values from the minimum value of the range up to and including the maximum value of the range, unless indicated otherwise. Furthermore, where such a range refers to integers, the range includes all integers from the minimum value of the range up to and including the maximum value of the range, unless indicated otherwise.

Herein, when a certain range is described for a variable, the variable will be understood to include all values within the stated range including the described endpoints of the stated range. For example, the range of "5 to 10" will be understood to include not only values, such as 5, 6, 7, 8, 9, and 10, but also any subrange thereof, such as 6 to 10, 7 to 10, 6 to 9, 7 to 9, and any value between integers that fall within the stated range, such as 5.5, 6.5, 7.5, 5.5 to 8.5, and 6.5 to 9. In addition, for example, the range of "10% to 30%" will be understood to include not only values, such as 10%, 11%, 12%, 13%, and all integers up to and including 30%, but also arbitrary subranges thereof, such as 10% to 15%, 12% to 18%, 20% to 30%, and arbitrary values between any of integers within the stated range, such as 10.5%, 15.5%, 25.5%, and the like.

In recent years, as polyethylene has been used for various applications, there is a need for a catalyst for preparation of a polyethylene resin with good processability and a method for preparing the same in order to improve productivity of the polyethylene resin.

In order to solve this problem, the present inventors have found that, in preparation of polyethylene using a Ziegler-Natta pro-catalyst for ethylene polymerization including an internal electron donor satisfying a specific formula and a Ziegler-Natta catalyst for ethylene polymerization further including at least one external electron donor satisfying a specific formula in a certain ratio, each of the internal electron donor and the external electron donor increases the number of active sites of a titanium compound, thereby enabling preparation of polyethylene with good processability.

Herein, unless stated otherwise, "C₁ to Cₙ alkyl group" means a primary alkyl group, a secondary alkyl group (n≥3), and a tertiary alkyl group (n≥4) having 1 to n carbon atoms. For example, the C₁ to Cₙ alkyl group may be a functional group, such as methyl, ethyl, *n-propyl, i-propyl, n-butyl, i-butyl, tert-butyl, n-hexyl,* and the like.

Herein, unless stated otherwise, "C₁ to C₁₀ alkoxy" means an -O-R group, where R includes "C₁ to C₁₀ alkyl", "aryl", "heteroaryl", or "benzyl". Preferred alkoxy groups include, for example, methoxy, ethoxy, phenoxy, benzyloxy, and the like.

Herein, unless stated otherwise, an aryl group means a chemical group obtained by removal of one hydrogen atom from a C₂ to C₃₀ monocyclic or polycyclic compound including at least one benzene ring, and derivatives thereof, in which the monocyclic or polycyclic compound including at least one benzene ring may include, for example, toluene, xylene, and the like, wherein an alky side chain is joined to the benzene ring; biphenyl and the like, wherein two or more benzene rings are joined to each other through a single bond; fluorene, xanthene, anthraquinone, and the like, wherein the benzene ring is condensed with a cycloalkyl group or a heterocycloalkyl group; naphthalene, anthracene, and the like, wherein two or more benzene rings are condensed, and the like.

Herein, unless stated otherwise, the prefix "hetero" means that a carbon atom is substituted with one to three heteroatoms selected from the group consisting of -N-, -O-, -S-, and -P-. For example, the heteroatom may include a pyridine, pyrrole, or carbazole containing a nitrogen atom, a furan or dibenzofuran containing an oxygen atom, dibenzothiophene or diphenylamine, and the like.

Herein, unless stated otherwise, a halogen group refers to a group XVII element, for example, a fluoro group, a chloro group, a bromo group, or an iodo group.

As used herein, the expression "substituted or unsubstituted" relates to substitution or non-substitution of a substituent, in which the substituent may be at least one selected from the group consisting of a halogen group, a cyano group, a nitro group, and a C₁ to C₈ alkyl group.

In accordance with one aspect of the present invention, a Ziegler-Natta pro-catalyst for ethylene polymerization includes: a titanium compound represented by Formula 1; a magnesium compound represented by Formula 2; and an internal electron donor represented by Formula 3.

[Formula 1] TiXₙ(OR¹)₄₋ₙ

In Formula 1, R¹ may be a halogen group, a nitrile group, a nitro group, an amine group, a substituted or unsubstituted C₁ to C₁₀ alkoxy group, a substituted or unsubstituted aryl group, a substituted or unsubstituted heteroaryl group, or a substituted or unsubstituted C₁ to C₂₀ alkyl group, preferably a substituted or unsubstituted C₁ to C₂₀ alkyl group. In "substituted or unsubstituted", a substituent may be independently at least one selected from the group consisting of a halogen group, a cyano group, a nitro group, and a C₁ to C₈ alkyl group. Further, X may be a halogen atom and n may be an integer of 0 to 4.

[Formula 2] MgX₂

In Formula 2, X may be a halogen atom.

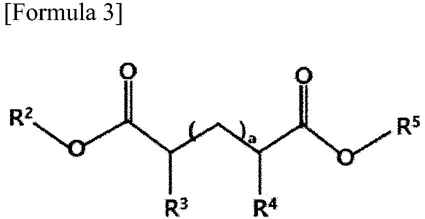

In Formula 3, R² and R⁵ may independently be a halogen group, a nitrile group, a nitro group, an amine group, a substituted or unsubstituted C₁ to C₁₀ alkoxy group, a substituted or unsubstituted aryl group, a substituted or unsubstituted heteroaryl group, or a substituted or unsubstituted C₁ to C₂₀ alkyl group, preferably, independently a substituted or unsubstituted C₁ to C₂₀ alkyl group. In addition, R³ and R⁴ may be a halogen group, a nitrile group, a nitro group, an amine group, a substituted or unsubstituted C₁ to C₁₀ alkoxy group, a substituted or unsubstituted aryl group, a substituted or unsubstituted heteroaryl group, or a substituted or unsubstituted C₁ to C₂₀ alkyl group, preferably, independently a substituted or unsubstituted C₁ to C₂₀ alkyl group. Furthermore, R³ and R⁴ may be linked together to form a substituted or unsubstituted alicyclic ring. In "substituted or unsubstituted", a substituent may be independently at least one selected from the group consisting of a halogen group, a cyano group, a nitro group, and a C₁ to C₈ alkyl group. Further, a may be an integer of 0 to 5.

According to one embodiment, the titanium compound serves to grow polyethylene while acting as a catalytic active site. Specifically, the titanium compound may include at least one selected from the group consisting of tetravalent titanium halides and titanium alkoxides, for example, titanium tetrachloride (TiCl₄), titanium trichloride (TiCl₃), and the like.

According to one embodiment, the magnesium compound serves to stabilize the catalytic active site while acting as a carrier of the catalyst. Specifically, the magnesium compound may include magnesium chloride (MgCl₂), magnesium oxide (MgO), magnesium sulfate (MgSO₄), and the like.

According to one embodiment, the internal electron donor may include a compound represented by Formula 3-1.

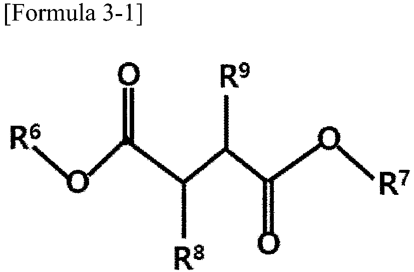

In Formula 3-1, R⁶ and R⁷ may independently be a halogen group, a nitrile group, a nitro group, an amine group, a substituted or unsubstituted C₁ to C₁₀ alkoxy group, a substituted or unsubstituted aryl group, a substituted or unsubstituted heteroaryl group, or a substituted or unsubstituted C₁ to C₂₀ alkyl group, preferably a substituted or unsubstituted C₁ to C₂₀ alkyl group. In addition, R⁸ and R⁹ may be independently a hydrogen atom, a halogen group, a nitrile group, a nitro group, an amine group, a substituted or unsubstituted C₁ to C₁₀ alkoxy group, a substituted or unsubstituted aryl group, a substituted or unsubstituted heteroaryl group, or a substituted or unsubstituted C₁ to C₂₀ alkyl group, preferably, independently a hydrogen atom or a substituted or unsubstituted C₁ to C₁₀ alkyl group. Furthermore, R⁸ and R⁹ may be linked together to form a substituted or unsubstituted C₅ to C₁₂ alicyclic ring. In "substituted or unsubstituted", a substituent may be independently at least one selected from the group consisting of a halogen group, a cyano group, a nitro group, and a C₁ to C₈ alkyl group.

According to one embodiment, the Ziegler-Natta pro-catalyst for ethylene polymerization may include, as an internal electron donor, a compound satisfying Formula 3-1, particularly at least one selected from the group consisting of diethyl-2,2-diisopropyl succinate, diethyl cyclohexane-1,2-dicarboxylate, and diisopropyl succinate, preferably diethyl-2,2-diisopropyl succinate, which has a functional group with a suitable size and is capable of generating a variety of binding modes on crystal planes of magnesium chloride. That is, the Ziegler-Natta pro-catalyst for ethylene polymerization includes the compound satisfying Formula 3-1 as the internal electron donor, whereby the number of active sites of the titanium compound is increased through generation of the binding modes [(110) bridge, (100) bridge] on the crystal planes of magnesium chloride to improve molecular weight distribution of polyethylene, thereby improving processability of polyethylene prepared through ethylene polymerization.

In accordance with another aspect of the present invention, a Ziegler-Natta catalyst for ethylene polymerization includes: a Ziegler-Natta pro-catalyst for ethylene polymerization; an organoaluminum compound represented by Formula 4; and an external electron donor represented by Formula 5. In the following description relating to the Ziegler-Natta catalyst for ethylene polymerization, redundant description of the Ziegler-Natta pro-catalyst for ethylene polymerization will be omitted.

[Formula 4] AlR¹⁰ₙX₃₋ₙ

In Formula 4, R¹⁰ may be a halogen group, a nitrile group, a nitro group, an amine group, a substituted or unsubstituted C₁ to C₁₀ alkoxy group, a substituted or unsubstituted aryl group, a substituted or unsubstituted heteroaryl group, or a substituted or unsubstituted C₁ to C₂₀ alkyl group, preferably a substituted or unsubstituted C₁ to C₂₀ alkyl group. In "substituted or unsubstituted", a substituent may be independently at least one selected from the group consisting of a halogen group, a cyano group, a nitro group, and a C₁ to C₈ alkyl group. Further, X may be a halogen atom and n may be an integer of 0 to 3.

[Formula 5] R¹¹ₘSi(OR¹²)₄₋ₘ

In Formula 5, R¹¹ and R¹² may be independently a halogen group, a nitrile group, a nitro group, an amine group, a substituted or unsubstituted C₁ to C₁₀ alkoxy group, a substituted or unsubstituted aryl group, a substituted or unsubstituted heteroaryl group, a substituted or unsubstituted C₁ to C₂₀ alkyl group, a substituted or unsubstituted C₅ to C₂₀ cycloalkyl group, or a substituted or unsubstituted amine group, preferably a substituted or unsubstituted C₁ to C₂₀ alkyl group, a substituted or unsubstituted C₅ to C₂₀ cycloalkyl group, or a substituted or unsubstituted amine group. In "substituted or unsubstituted", a substituent may be independently at least one selected from the group consisting of a halogen group, a cyano group, a nitro group, and a C₁ to C₈ alkyl group. Further, m may be an integer of 0 to 4.

According to one embodiment, the organoaluminum compound serves to promote polymerization activity and may include trialkylaluminum, specifically triethylaluminum, trimethylaluminum, or diethylaluminum chloride.

According to one embodiment, the external electron donor may include at least one of compounds represented by Formula 5-1 and Formula 5-2.

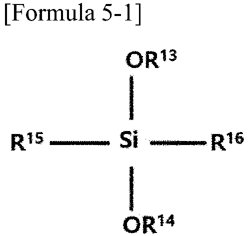

In Formula 5-1, R¹³ to R¹⁶ may be independently a halogen group, a nitrile group, a nitro group, an amine group, a substituted or unsubstituted C₁ to C₁₀ alkoxy group, a substituted or unsubstituted aryl group, a substituted or unsubstituted heteroaryl group, a substituted or unsubstituted C₁ to C₂₀ alkyl group, or a substituted or unsubstituted C₅ to C₂₀ cycloalkyl group, preferably a substituted or unsubstituted C₁ to C₂₀ alkyl group, or a substituted or unsubstituted C₅ to C₂₀ cycloalkyl group. In "substituted or unsubstituted", a substituent may be independently at least one selected from the group consisting of a halogen group, a cyano group, a nitro group, and a C₁ to C₈ alkyl group.

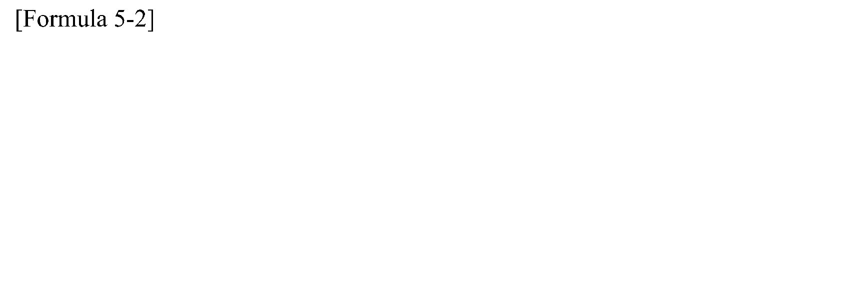

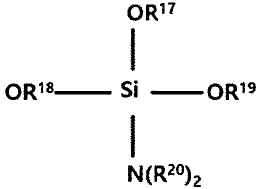

In Formula 5-2, R¹⁷ to R²⁰ may be independently a halogen group, a nitrile group, a nitro group, an amine group, a substituted or unsubstituted C₁ to C₁₀ alkoxy group, a substituted or unsubstituted aryl group, a substituted or unsubstituted heteroaryl group, a substituted or unsubstituted C₁ to C₂₀ alkyl group, or a substituted or unsubstituted C₅ to C₂₀ cycloalkyl group, preferably a substituted or unsubstituted C₁ to C₂₀ alkyl group or a substituted or unsubstituted C₅ to C₂₀ cycloalkyl group. In "substituted or unsubstituted", a substituent may be independently at least one selected from the group consisting of a halogen group, a cyano group, a nitro group, and a C₁ to C₈ alkyl group.

Preferably, the external electron donor may include at least one of compounds represented by Formulas 5-1a to 5-1d and Formula 5-2a.

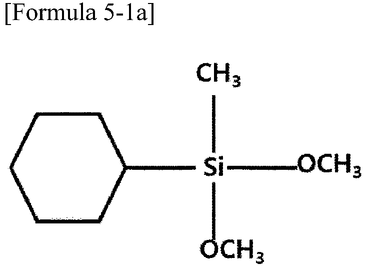

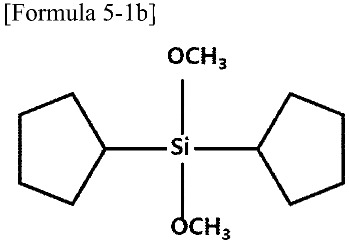

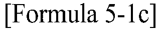

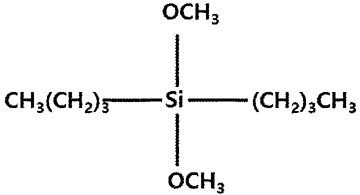

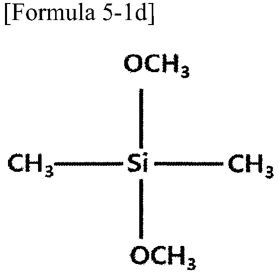

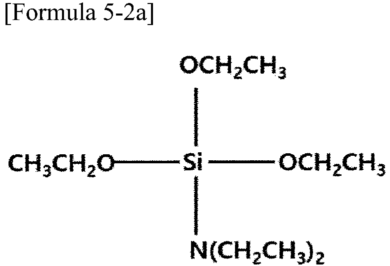

According to one embodiment, the external electron donor may include any one of the compounds represented by Formula 5-1a, Formula 5-1d, and Formula 5-2a, or may include two compounds selected from the group consisting of the compounds represented by Formula 5-1a, Formula 5-1d, and Formula 5-2a. Preferably, when including two compounds, the external electron donor increases polymerization activity through stabilization of the catalytic active sites. For example, when including two compounds, the external electron donor may include the compound represented by Formula 5-1a and any one of Formula 5-1b to Formula 5-1d, and Formula 5-2a; the compound represented by Formula 5-1b and any one of Formula 5-1c to Formula 5-1d, and Formula 5-2a; the compound represented by Formula 5-1c and any of the compounds represented by Formula 5-1d and Formula 5-2a; or the compound represented by Formula 5-1d and the compound represented by Formula 5-2a.

According to one embodiment, when the external electron donor includes two compounds, a mole ratio of a first compound selected from among the compounds represented by Formula 5-1a, Formula 5-1d, and Formula 5-2a to a second compound selected from among the compounds represented by Formula 5-1a, Formula 5-1d, and Formula 5-2a may be about 1:0.5 to 1.5. Here, the first compound and the second compound may be different from each other. For example, in the external electron donor, the first compound may be the compound represented by Formula 5-1a and the second compound may be any one of the compounds represented by Formula 5-1b to Formula 5-1d, and Formula 5-2a. Here, the mole ratio of the first compound to the second compound may be about 1:0.5 to 1.5, preferably, 1:0.8 to 1.2. In some embodiments, the mole ratio of the first compound to the second compound may be about 1:0.6 to 1.4, for example, about 1:0.8, about 1:1, or about 1:1.2.

With this mole ratio, the external electron donor can stabilize the catalytic active sites and can prevent decrease in activity due to poisoning of the catalytic active sites.

According to one embodiment, the Ziegler-Natta catalyst for ethylene polymerization includes an internal electron donor satisfying a specific formula of the Ziegler-Natta pro-catalyst for ethylene polymerization and at least one compound satisfying Formula 5-1 and Formula 5-2, preferably Formulas 5-1a to 5-1d and Formula 5-2a, as an external electron donor, whereby the number of active sites of the titanium compound is increased through stabilization of the catalytic active sites and generation of additional binding modes [(110) bridge, (100) bridge, (110) chelate] on the crystal planes of magnesium chloride to further improve the molecular weight distribution of the polyethylene, thereby further improving processability of the polyethylene prepared through ethylene polymerization.

In accordance with a further aspect of the present invention, a method for preparing a Ziegler-Natta pro-catalyst for ethylene polymerization includes: a first stirring step in which a titanium compound represented by Formula 1 is mixed with a magnesium compound represented by Formula 2, followed by stirring; a second stirring step in which an internal electron donor represented by Formula 3 is added to a first stirring product obtained by the first stirring step, followed by stirring; and vacuum drying a second stirring product obtained by the second stirring step. In the following description relating to the method for preparing the Ziegler-Natta pro-catalyst for ethylene polymerization, redundant description of the Ziegler-Natta pro-catalyst for ethylene polymerization will be omitted.

According to one embodiment, the first stirring step includes adding the titanium compound represented by Formula 1 and the magnesium compound represented by Formula 2 to an organic solvent, followed by stirring while raising temperature from room temperature to a first temperature at a rate of about 0.5°C/min to about 1.5°C/min.

According to one embodiment, the organic solvent may include toluene, ether, acetone, alcohol, and the like, preferably toluene.

According to one embodiment, the first temperature may range from about 70°C to about 90°C, preferably from 75°C to 85°C. Outside this first temperature range, too low a first temperature has a problem in that the internal electron donor is insoluble in the solvent, and too high a first temperature causes side reactions of the internal electron donor.

According to one embodiment, the second stirring step includes adding the internal electron donor represented by Formula 3 to the first stirring product, raising the temperature to a second temperature, and stirring the first stirring product for about 1.8 hours to about 2.2 hours.

According to one embodiment, the second temperature may range from about 100°C to about 120°C, preferably from 105°C to 115°C. Outside this second temperature range, too low a second temperature has a problem in that titanium tetrachloride is not supported on the carrier, and too high a second temperature causes evaporation of the solvent, for example, toluene.

According to one embodiment, the method may further include a third stirring step after the second stirring step. Specifically, the method includes removing the organic solvent and titanium tetrachloride (TiCl₄), adding fresh organic solvent and titanium tetrachloride (TiCl₄), and raising the temperature from room temperature to a third temperature, followed by stirring for about 1.8 hours to about 2.2 hours. After stirring, the method may further include washing a resulting product of the third stirring step with an organic solvent or the like.

According to one embodiment, the third temperature may range from about 100°C to about 120°C, preferably from 105°C to 115°C.

According to one embodiment, the step of vacuum drying includes drying the second stirring product or the third stirring product under vacuum to obtain a Ziegler-Natta pro-catalyst for ethylene polymerization in powder form. The method may further include washing the second stirring product or the third stirring product with an organic solvent or the like before vacuum drying the second stirring product or the third stirring product.

In accordance with yet another aspect of the present invention, a method for preparing a Ziegler-Natta catalyst for ethylene polymerization includes adding a Ziegler-Natta pro-catalyst for ethylene polymerization, an organoaluminum compound represented by Formula 4, and an external electron donor represented by Formula 5 to an organic solvent, followed by stirring. In the following description relating to the method for preparing a Ziegler-Natta pro-catalyst for ethylene polymerization, redundant description of the Ziegler-Natta pro-catalyst for ethylene polymerization will be omitted.

According to one embodiment, the organic solvent may include hexane, toluene, ether, acetone, alcohol, and the like, preferably hexane.

According to one embodiment, stirring may be performed at about 280 rpm to about 320 rpm, preferably about 290 rpm to about 310 rpm. In some embodiments, stirring may be performed at about 285 rpm to about 315 rpm, for example, 290 rpm, 295 rpm, 300 rpm, 305 rpm, or 310 rpm.

According to one embodiment, stirring may be performed at a pressure of about 6 bar to about 8 bar under a hydrogen gas atmosphere. In some embodiments, the pressure may range from about 6.2 bar to about 7.8 bar, for example, 6.4 bar, 6.6 bar, 6.8 bar, 7 bar, 7.2 bar, 7.4 bar, or 7.6 bar. This pressure condition is set to match the vapor pressure of ethylene monomers used in preparation of polyethylene.

According to one embodiment, the titanium compound and the external electron donor may be present in a mole ratio of about 1:3 to 7, preferably in a mole ratio of 1:4 to 6, in the Ziegler-Natta pro-catalyst for ethylene polymerization. In one embodiment, the mole ratio of the titanium compound to the external electron donor in the Ziegler-Natta pro-catalyst for ethylene polymerization may be about 1:3.1 to 6.8, for example, about 1:3.5, 1:4.0, 1:4.5, 1:5.0, 1:5.5, 1:6.0, or 1:6.5. Within this mole ratio range, the titanium compound and the external electron donor can secure good stability of the catalytic active sites and can prevent deterioration in activity due to poisoning of the catalytic active sites.

In accordance with yet another aspect of the present invention, a method for preparing polyethylene includes polymerizing an olefin represented by Formula 6 in the presence of a Ziegler-Natta catalyst for ethylene polymerization. Preferably, the method includes polymerizing the olefin by adding an ethylene monomer.

[Formula 6] CH₂=CHR²¹

In Formula 6, R²¹ may be a hydrogen atom or a C₁ to C₆ alkyl or aryl group.

According to one embodiment, the method for preparing polyethylene may include adding an ethylene monomer to polymerize in the presence of the Ziegler-Natta catalyst for ethylene polymerization, wherein polymerization may be carried out under conditions of a pressure of about 6 bar to 8 bar and a temperature of about 80°C to 90°C in a hydrogen gas atmosphere. In polymerization, too low a temperature makes it difficult to achieve polymerization due to decrease in catalytic activity, and too high a temperature causes rapid decrease in catalytic activity due to overreaction of the catalyst.

According to one embodiment, polymerization may be carried out for about 0.5 hours to 1.5 hours, preferably for 0.8 hours to 1.2 hours.

In the description of the polyethylene preparation method, redundant description of the Ziegler-Natta catalyst for ethylene polymerization will be omitted.

In accordance with yet another aspect of the present invention, polyethylene prepared by the polyethylene preparation method using the Ziegler-Natta catalyst for ethylene polymerization may have an MFR ratio (MFR_{21.6}/MFR_{2.16}) of about 30 to about 40.

According to one embodiment, the polyethylene prepared by the method for preparing polyethylene using the Ziegler-Natta catalyst for ethylene polymerization may have an MFR_{21.6} of about 30 g/10 min to about 46 g/10 min, preferably 30.6 g/10 min to 45.1 g/10 min, at a temperature of 190°C and at a load of 21.6 kg, and an MFR_{2.16} of about 0.8 g/10 min to 1.4 g/10 min, preferably 0.9 g/10 min to 1.3 g/10 min, at a temperature of 190°C and at a load of 2.16 kg, thereby providing an MFR ratio (MFR_{21.6}/MFR_{2.16}) of about 30 to about 40. In some embodiments, the MFR ratio (MFR_{21.6}/MFR_{2.16}) may range from about 30.2 to about 39.8, for example, 30.6, 31.1, 31.2, 31.7, 32.4, 32.8, 36.4, 37.6, 36.7, or 39.8.

That is, the polyethylene prepared by the method for preparing polyethylene using the Ziegler-Natta catalyst for ethylene polymerization according to the present invention includes an internal electron donor satisfying a specific formula, thereby increasing the number of active sites of the titanium compound through generation of binding modes [(110) bridge, (100) bridge] on the crystal planes of magnesium chloride to improve molecular weight distribution of polyethylene, and further includes an external electron donor satisfying a specific formula in a certain ratio, thereby further increasing the number of active sites of the titanium compound through stabilization of catalytic active sites and generation of additional bonding modes [(110) bridge, (100) bridge, (110) chelate] on the crystal planes of magnesium chloride to further improve the molecular weight distribution of polyethylene.

Next, the present invention will be described in more detail with reference to some examples. It should be understood that these examples are provided for illustration only and are not to be construed in any way as limiting the invention.

### Example 1: Preparation of polyethylene using Ziegler-Natta catalyst for ethylene polymerization

### Preparative Example 1: Preparation of Ziegler-Natta pro-catalyst for ethylene polymerization

4 g of a magnesium compound (MgCl₂) carrier and 8 ml of a titanium compound (TiCl₄) were added to 12 ml of toluene, an organic solvent, followed by first stirring while raising temperature from room temperature to 80°C (at 1°C/min). Then, when the reaction temperature reached 80°C, an internal electron donor, diethyl-2,2-diisopropyl succinate (A) (4.5 mmol), was added to the first stirring product and warmed up to 110°C, followed by second stirring for 2 hours. Then, with the TiCl₄ and toluene solution removed, fresh TiCl₄ (10 ml) and toluene (30 ml) were added to the second stirring product, which in turn was warmed from room temperature to 110°C and was subjected to third stirring for 2 hours. Then, a resulting catalyst obtained by third stirring was washed with 100 ml toluene twice and with 100 ml hexane twice, and dried under vacuum, thereby preparing a Ziegler-Natta pro-catalyst (supported catalyst) for ethylene polymerization in powder form.

### Preparative Example 2: Preparation of Ziegler-Natta catalyst for ethylene polymerization and Polyethylene

A 2-liter high-pressure reactor was dried in an oven and assembled in a hot state, and was placed under a nitrogen atmosphere by alternating nitrogen and vacuum three times. Then, 1,000 ml of hexane, an organic solvent, was added to the reactor, followed by adding 15 mg of the Ziegler-Natta pro-catalyst for ethylene polymerization (Preparative Example 1), 0.18 ml of an external electron donor [Formula 5-1a, cyclohexylmethyldimethoxysilane], and 2 ml of triethylaluminum, an organoaluminum compound. Then, hydrogen was injected at 7 bar to the reactor, followed by stirring at 300 rpm, thereby preparing a Ziegler-Natta catalyst for ethylene polymerization. Then, with the temperature of the reactor raised to 85°C, polyethylene polymerization was carried out for 1 hour while adding ethylene to the reactor at 7 bar. Then, the temperature of the reactor was lowered to room temperature and the resulting polymer was collected and dried, thereby preparing a white polyethylene polymer in powder form.

### Example 2: Preparation of polyethylene with different external electron donor

A polyethylene polymer was prepared in the same manner as in Example 1 except that dicyclopentyldimethoxysilane (Formula 5-1b) was used as an external electron donor in Preparative Example 2.

### Example 3: Preparation of polyethylene with different external electron donor

A polyethylene polymer was prepared in the same manner as in Example 1 except that diethylaminotriethoxysilane (Formula 5-2a) was used as an external electron donor in Preparative Example 2.

### Example 4: Preparation of polyethylene with different external electron donor

A polyethylene polymer was prepared in the same manner as in Example 1 except that dimethoxy(dibutyl)silane (Formula 5-1c) was used as an external electron donor in Preparative Example 2.

### Example 5: Preparation of polyethylene with different external electron donor

A polyethylene polymer was prepared in the same manner as in Example 1 except that dimethoxy(dimethyl)silane (Formula 5-1d) was used as an external electron donor in Preparative Example 2.

### Example 6: Preparation of polyethylene with different external electron donor

A polyethylene polymer was prepared in the same manner as in Example 1 except that cyclohexylmethyldimethoxysilane (Formula 5-1a) and dicyclopentyldimethoxysilane (Formula 5-1b) were used in a mole ratio of 1:1 as external electron donors.

### Example 7: Preparation of polyethylene with different external electron donor

A polyethylene polymer was prepared in the same manner as in Example 1 except that cyclohexylmethyldimethoxysilane (Formula 5-1a) and diethylaminotriethoxysilane (Formula 5-2a) were used in a mole ratio of 1:1 as external electron donors.

### Example 8: Preparation of polyethylene with different external electron donor

A polyethylene polymer was prepared in the same manner as in Example 1 except that cyclohexylmethyldimethoxysilane (Formula 5-1a) and dimethoxy(dibutyl)silane (Formula 5-1c) were used in a mole ratio of 1:1 as external electron donors.

### Example 9: Preparation of polyethylene with different external electron donor

A polyethylene polymer was prepared in the same manner as in Example 1 except that cyclohexylmethyldimethoxysilane (Formula 5-1a) and dimethoxy(dimethyl)silane (Formula 5-1d) were used in a mole ratio of 1:1 as external electron donors.

### Example 10: Preparation of polyethylene with different external electron donor

A polyethylene polymer was prepared in the same manner as in Example 1 except that cyclohexylmethyldimethoxysilane (Formula 5-1a) and dicyclopentyldimethoxysilane (Formula 5-1b) were used in a mole ratio of 1:0.6 as external electron donors.

### Example 11: Preparation of polyethylene with different external electron donor

A polyethylene polymer was prepared in the same manner as in Example 1 except that cyclohexylmethyldimethoxysilane (Formula 5-1a) and dicyclopentyldimethoxysilane (Formula 5-1b) were used in a mole ratio of 1:1.4 as external electron donors.

### Comparative Example 1: Preparation of Polyethylene with other catalyst

A polyethylene polymer was prepared in the same manner as in Example 1 except that diisobutyl phthalate (B) (4.5 mmol) was used as an inner electron donor instead of diethyl-2,2-diisopropyl succinate (A).

### Comparative Example 2: Preparation of polyethylene with different external electron donor

A polyethylene polymer was prepared in the same manner as in Comparative Example 1 except that cyclohexylmethyldimethoxysilane (Formula 5-1a) and dicyclopentyldimethoxysilane (Formula 5-1b) were used in a mole ratio of 1:1 as external electron donors.

### Comparative Example 3: Preparation of polyethylene with different external electron donor

A polyethylene polymer was prepared in the same manner as in Comparative Example 1 except that cyclohexylmethyldimethoxysilane (Formula 5-1a) and dimethoxy(dibutyl)silane (Formula 5-1c) were used in a mole ratio of 1:1 as external electron donors

### Comparative Example 4: Preparation of polyethylene with different external electron donor

A polyethylene polymer was prepared in the same manner as in Comparative Example 1 except that cyclohexylmethyldimethoxysilane (Formula 5-1a) and dimethoxy(dimethyl)silane (Formula 5-1d) were used in a mole ratio of 1:1 as external electron donors.

### Comparative Example 5: Preparation of polyethylene with different external electron donor

A polyethylene polymer was prepared in the same manner as in Example 1 except that cyclohexylmethyldimethoxysilane (Formula 5-1a) and dicyclopentyldimethoxysilane (Formula 5-1b) were used in a mole ratio of 1:0.2 as external electron donors.

### Comparative Example 6: Preparation of polyethylene with different external electron donor

A polyethylene polymer was prepared in the same manner as in Example 1 except that cyclohexylmethyldimethoxysilane (Formula 5-1a) and dicyclopentyldimethoxysilane (Formula 5-1b) were used in a mole ratio of 1:1.8 as external electron donors.

### Comparative Example 7: Preparation of polyethylene with different external electron donor

A polyethylene polymer was prepared in the same manner as in Example 1 except that cyclohexylmethyldimethoxysilane (Formula 5-1a) and diethylaminotriethoxysilane (Formula 5-2a) were used in a mole ratio of 1:0.2 as external electron donors.

### Comparative Example 8: Preparation of polyethylene with different external electron donor

A polyethylene polymer was prepared in the same manner as in Example 1 except that cyclohexylmethyldimethoxysilane (Formula 5-1a) and diethylaminotriethoxysilane (Formula 5-2b) were used in a mole ratio of 1:1.8 as external electron donors.

### Evaluation of polyethylene property

- Measurement of activity (g_{PE}/g_{cat}): Weight of resin obtained (g) / weight of catalyst (g)
- Measurement of MFR_{2.16} (g/10 min): ASTM D1238 (190°C)
- Measurement of MFR_{21.6} (g/10 min): ASTM D1238 (190°C)
- Measurement of Density (kg/cm³): ASTM D792

### Evaluation results of polyethylene property

**Table 1**

| Type | Internal electron donor | External electron donor (mole ratio) | Mole ratio of titanium compound to external electron donor | Activity (g_{PE}/g_{cat}) | MFR_{2.16} (g/10 min) | MFR₂₁.₆ (g/10 min) | MFR ratio (MFR_{21.6}/ MFR_{2.16}) | Density (kg/cm³) |
|---|---|---|---|---|---|---|---|---|
| Example 1 | A | Formula 5-1a | 1:5 | 4,533 | 1.3 | 39.3 | 30.2 | 0.962 |
| Example 2 | A | Formula 5-1b | 1:5 | 4,600 | 1.3 | 41.2 | 31.7 | 0.961 |
| Example 3 | A | Formula 5-2a | 1:5 | 5,000 | 1.3 | 40.4 | 31.1 | 0.953 |
| Example 4 | A | Formula 5-1c | 1:5 | 8,533 | 1.0 | 30.6 | 30.6 | 0.958 |
| Example 5 | A | Formula 5-1d | 1:5 | 5,467 | 1.0 | 31.2 | 31.2 | 0.958 |
| Example 6 | A | Formula 5-la+Formula 5-1b (1:1) | 1:5 | 5,667 | 1.1 | 43.8 | 39.8 | 0.957 |
| Example 7 | A | Formula 5-la+Formula 5-2a (1:1) | 1:5 | 5,267 | 1.2 | 45.1 | 37.6 | 0.957 |
| Example 8 | A | Formula 5-1a+Formula5-1c (1:1) | 1:5 | 8,200 | 1.0 | 36.4 | 36.4 | 0.953 |
| Example 9 | A | Formula 5-la+Formula 5-1d(1:1) | 1:5 | 8,400 | 0.9 | 33.0 | 36.7 | 0.958 |
| Example 10 | A | Formula 5-la+Formula 5-1b(1:0.6) | 1:5 | 5,156 | 1.0 | 32.4 | 32.4 | 0.954 |
| Example11 | A | Formula 5-la+Formula 5-1b(1:1.4 | 1:5 | 5,062 | 1.1 | 36.1 | 32.8 | 0.956 |
| Comparative Example 1 | B | Formula 5-la | 1:5 | 5,267 | 1.0 | 25.1 | 25.1 | 0.957 |
| Comparative Example 2 | B | Formula 5-la+Formula 5-1b (1:1) | 1:5 | 3,600 | 1.6 | 42.1 | 26.3 | 0.956 |
| Comparative Example 3 | B | Formula 5-la+Formula 5-1c (1:1) | 1:5 | 4,067 | 1.6 | 43.4 | 27.1 | 0.957 |
| Comparative Example 4 | B | Formula 5-la+ Formula 5-1d (1:1) | 1:5 | 5,800 | 1.0 | 26.0 | 26.0 | 0.955 |
| Comparative Example 5 | A | Formula 5-la+ Formula 5-1b(1:0.2) | 1:5 | 3,584 | 1.1 | 32.0 | 29.1 | 0.956 |
| Comparative Example 6 | A | Formula 5-la+ Formula 5-1b(1:1.8) | 1:5 | 3,162 | 0.9 | 28.9 | 29.2 | 0.955 |
| Comparative Example 7 | A | Formula 5-la+ Formula 5-2a (1:0.2) | 1:5 | 3,611 | 1.0 | 28.5 | 28.5 | 0.957 |
| Comparative Example 8 | A | Formula 5-la+ Formula 5-2a (1:1.8) | 1:5 | 2,954 | 1.2 | 37.8 | 28.3 | 0.956 |

| | | | | | | | | |
|---|---|---|---|---|---|---|---|---|
| * A = diethyl-2,2-diisopropyl succinate, B = diisobutyl phthalate | | | | | | | | |

Referring to Table 1, it could be seen that, although the other properties were similar, the polyethylene prepared in Examples 1 to 11 had a higher MFR ratio (MFR_{21.6}/MFR_{2.16}) of 30 to 40 than the polyethylene prepared in Comparative Examples 1 to 4. The polyethylene prepared by the method for preparing polyethylene using the Ziegler-Natta catalyst for ethylene polymerization according to the present invention includes an internal electron donor satisfying a specific formula, thereby increasing the number of active sites of the titanium compound through generation of binding modes [(110) bridge, (100) bridge] on the crystal planes of magnesium chloride to improve molecular weight distribution of polyethylene, and further includes an external electron donor satisfying a specific formula in a certain ratio, thereby further increasing the number of active sites of the titanium compound through stabilization of catalytic active sites and generation of additional bonding modes [(110) bridge, (100) bridge, (110) chelate] on the crystal planes of magnesium chloride to further improve the molecular weight distribution of polyethylene. Accordingly, it could be seen that the polyethylene prepared in Examples had a higher MFR ratio, thereby securing improvement in productivity of a polyethylene resin through improvement in processability of the polyethylene.

In particular, it could be seen that the polyethylene prepared in Examples 6 to 11 had a higher MFR ratio than the polyethylene prepared in Examples 1 to 5. As a result, it could be confirmed that, when the polyethylene includes two types of external electron donors satisfying specific formulas according to the present invention, the two types of external electron donors with different binding strength can be supported on the magnesium chloride carrier, whereby the number of catalytic active sites can be further increased to allow increase in the MFR ratio of the polyethylene, thereby securing improvement in productivity of a polyethylene resin through improvement in processability of the polyethylene.

For example, when the external electron donor includes two compounds, for example, comparing polyethylene prepared in Example 6 with polyethylene prepared in Comparative Examples 5 and 6; or comparing polyethylene prepared in Example 7 with polyethylene according to Comparative Example 7 and Comparative Example 8, it could be seen that, when the mole ratio of the external electron donors including the compound represented by Formula 5-1a and any of the compounds represented by Formula 5-1b to Formula 5-1d, and Formula 5-2a failed to satisfy 1:0.5 to 1.5, the polyethylene failed to satisfy the MFR ratio. That is, it could be confirmed that, even when the Ziegler-Natta catalyst for ethylene polymerization according to the present invention contained two types of external electron donors, only the polyethylene satisfying the above mole ratio had a good MFR ratio securing improvement in productivity of a polyethylene resin through improvement in processability of the polyethylene.

That is, polyethylene prepared by the method for preparing polyethylene using the Ziegler-Natta catalyst for ethylene polymerization has good processability due to a high MFR ratio and activity (g_{PE}/g_{cat}) value, thereby securing improvement in productivity of a polyethylene resin.

It should be understood that various modifications, changes, alterations, and equivalent embodiments may be made by those skilled in the art without departing from the spirit and scope of the invention.

### [Industrial Availability]

A Ziegler-Natta pro-catalyst for ethylene polymerization includes an internal electron donor satisfying a specific formula to increase the number of active sites of a titanium compound, and a Ziegler-Natta catalyst for ethylene polymerization further includes at least one external electron donor satisfying a specific formula in a certain ratio to further increase the number of active sites of the titanium compound, whereby polyethylene prepared using the Ziegler-Natta catalyst has good processability.

## Claims

1. A Ziegler-Natta pro-catalyst for ethylene polymerization, comprising:
a titanium compound represented by Formula 1;
a magnesium compound represented by Formula 2; and
an internal electron donor represented by Formula 3.
[Formula 1] TiXₙ(OR¹)₄₋ₙ
(In Formula 1,
R¹ is a substituted or unsubstituted C₁ to C₂₀ alkyl group;
a substituent in "substituted or unsubstituted" is independently at least one selected from the group consisting of a halogen group, a cyano group, a nitro group, and a C₁ to C₈ alkyl group;
X is a halogen atom; and
n is an integer of 0 to 4.)
[Formula 2] MgX₂
(In Formula 2, X is a halogen atom.) 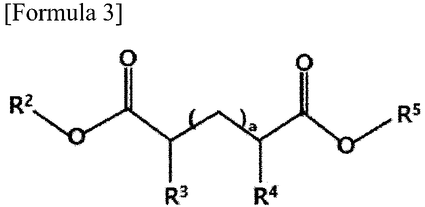
(In Formula 3,
R² and R⁵ are independently a substituted or unsubstituted C₁ to C₂₀ alkyl group;
R³ and R⁴ are independently a substituted or unsubstituted C₁ to C₂₀ alkyl group, or are linked together to form a substituted or unsubstituted alicyclic ring;
a substituent in "substituted or unsubstituted" is independently at least one selected from the group consisting of a halogen group, a cyano group, a nitro group, and a C₁ to C₈ alkyl group; and
a is an integer of 0 to 5.)

2. The Ziegler-Natta pro-catalyst for ethylene polymerization according to claim 1, wherein the internal electron donor comprises a compound represented by Formula 3-1. 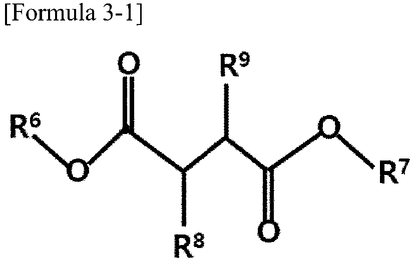 (In Formula 3-1,
R⁶ and R⁷ are independently a substituted or unsubstituted C₁ to C₁₀ alkyl group; and
R⁸ and R⁹ are independently a hydrogen atom or a substituted or unsubstituted C₁ to C₁₀ alkyl group, or are linked together to form a substituted or unsubstituted C₅ to C₁₂ alicyclic ring; and
a substituent in "substituted or unsubstituted" is independently at least one selected from the group consisting of a halogen group, a cyano group, a nitro group, and a C₁ to C₈ alkyl group.)

3. The Ziegler-Natta pro-catalyst for ethylene polymerization according to claim 1, wherein the internal electron donor comprises at least one selected from the group consisting of diethyl-2,2-diisopropyl succinate, diethyl cyclohexane-1,2-dicarboxylate, and diisopropyl succinate.

4. A Ziegler-Natta catalyst for ethylene polymerization, comprising:
a Ziegler-Natta pro-catalyst for ethylene polymerization comprising an internal electron donor represented by Formula 3;
an organoaluminum compound represented by Formula 4; and
an external electron donor represented by Formula 5. 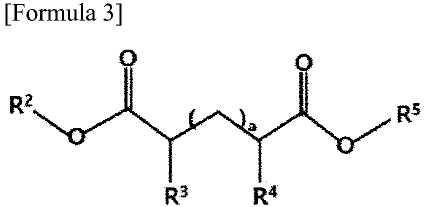
(In Formula 3,
R² and R⁵ are independently a substituted or unsubstituted C₁ to C₂₀ alkyl group;
R³ and R⁴ are independently a substituted or unsubstituted C₁ to C₂₀ alkyl group, or are linked together to form a substituted or unsubstituted alicyclic ring;
a substituent in "substituted or unsubstituted" is independently at least one selected from the group consisting of a halogen group, a cyano group, a nitro group, and a C₁ to C₈ alkyl group; and
a is an integer of 0 to 5.)
[Formula 4] AlR¹⁰ₙX₃₋ₙ
(In Formula 4,
R¹⁰ is a substituted or unsubstituted C₁ to C₂₀ alkyl group;
a substituent in "substituted or unsubstituted" is independently at least one selected from the group consisting of a halogen group, a cyano group, a nitro group, and a C₁ to C₈ alkyl group;
x is a halogen atom; and
n is an integer of 0 to 3.)
[Formula 5] R¹¹ₘSi(OR¹²)₄₋ₘ
(In Formula 5,
R¹¹ and R¹² are independently a substituted or unsubstituted C₁ to C₂₀ alkyl group, a substituted or unsubstituted C₅ to C₂₀ cycloalkyl group, or a substituted or unsubstituted amine group;
a substituent in "substituted or unsubstituted" is independently at least one selected from the group consisting of a halogen group, a cyano group, a nitro group, and a C₁ to C₈ alkyl group; and
m is an integer of 0 to 4.

5. The Ziegler-Natta pro-catalyst for ethylene polymerization according to claim 4, wherein the internal electron donor comprises a compound represented by Formula 3-1. 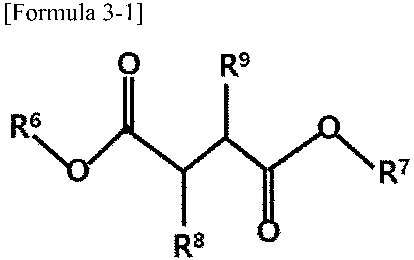 (In Formula 3-1,
R⁶ and R⁷ are independently a substituted or unsubstituted C₁ to C₁₀ alkyl group;
R⁸ and R⁹ are independently a hydrogen atom or a substituted or unsubstituted C₁ to C₁₀ alkyl group, or are linked together to form a substituted or unsubstituted C₅ to C₁₂ alicyclic ring; and
a substituent in "substituted or unsubstituted" is independently at least one selected from the group consisting of a halogen group, a cyano group, a nitro group, and a C₁ to C₈ alkyl group.)

6. The Ziegler-Natta pro-catalyst for ethylene polymerization according to claim 4, wherein the internal electron donor comprises at least one compounds selected from the group consisting of diethyl-2,2-diisopropyl succinate, diethyl cyclohexane-1,2-dicarboxylate, and diisopropyl succinate.

7. The Ziegler-Natta pro-catalyst for ethylene polymerization according to claim 4, wherein the external electron donor comprises at least one of compounds represented by Formula 5-1 and Formula 5-2. 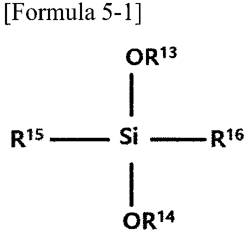 (In Formula 5-1,
R¹³ to R¹⁶ are independently a substituted or unsubstituted C₁ to C₂₀ alkyl group, or a substituted or unsubstituted C₅ to C₂₀ cycloalkyl group; and
a substituent in "substituted or unsubstituted" is independently at least one selected from the group consisting of a halogen group, a cyano group, a nitro group, and a C₁ to C₈ alkyl group.) 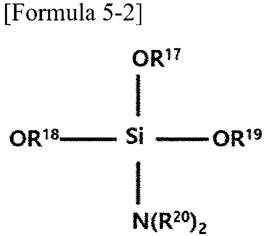
(In Formula 5-2,
R¹⁷ to R²⁰ are independently a substituted or unsubstituted C₁ to C₂₀ alkyl group, or a substituted or unsubstituted C₅ to C₂₀ cycloalkyl group; and
a substituent in "substituted or unsubstituted" is independently at least one selected from the group consisting of a halogen group, a cyano group, a nitro group, and a C₁ to C₈ alkyl group.)

8. The Ziegler-Natta pro-catalyst for ethylene polymerization according to claim 4, wherein the external electron donor comprises at least one of compounds represented by Formulas 5-1a to 5-1d and Formula 5-2a.

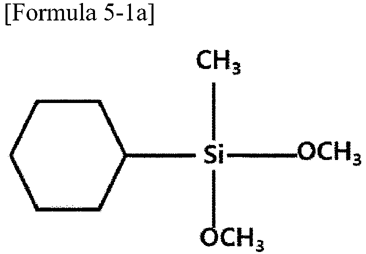

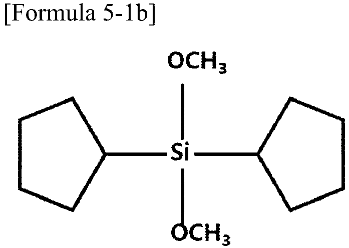

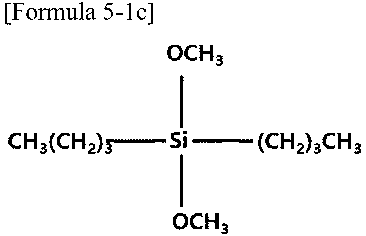

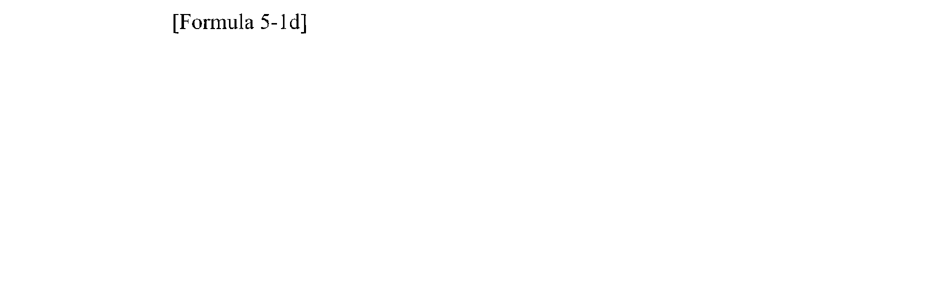

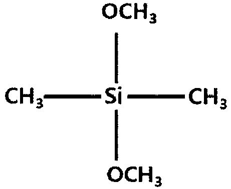

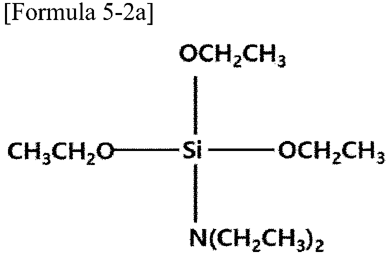

9. The Ziegler-Natta pro-catalyst for ethylene polymerization according to claim 8, wherein a mole ratio of a first compound selected from among the compounds represented by Formulas 5-1a to 5-1d and Formula 5-2a to a second compound selected from among the compounds represented by Formulas 5-1a to 5-1d and Formula 5-2a is 1:0.5 to 1.5.

10. The Ziegler-Natta pro-catalyst for ethylene polymerization according to claim 4, wherein a mole ratio of the titanium compound to the external electron donor in the Ziegler-Natta pro-catalyst for ethylene polymerization is 1:3 to 7.

11. A method for preparing polyolefin, comprising: polymerizing an olefin represented by Formula 6 in the presence of the Ziegler-Natta catalyst for ethylene polymerization according to any one of claims 4 to 10.
[Formula 6] CH₂=CHR²¹
(In Formula 6, R²¹ is a hydrogen atom or a C₁ to C₆ alkyl or aryl group.)

12. The method for preparing polyolefin according to claim 11, wherein the polymerization is carried out under conditions of a pressure of 6 bar to 8 bar and a temperature of 80°C to 90°C in a hydrogen gas atmosphere.

13. A polyethylene resin prepared by the method for preparing polyolefin according to claim 11, having an MFR ratio (MFR_{21.6}/MFR_{2.16}) of 30 to 40.
